# EUROPEAN PATENT SPECIFICATION

(11) **EP 2 392 882 B1**
(45) Date of publication and mention of the grant of the patent: **13.12.2017**
(21) Application number: 11168482.5
(22) Date of filing: 01.06.2011
(51) Int. Cl.: F28D 7/00, F01K 17/02, F26B 3/10, F01K 17/04, F01K 7/06, F01K 7/40, F26B 17/10, F28D 21/00, F26B 23/00, F28D 7/16, F28B 1/02

(54) **Heat exchange system**
Wärmetauschersystem
Système d'échange thermique

(30) Priority: 01.06.2010 SE 1050552
(43) Date of publication of application: 07.12.2011
(73) Proprietor: Outotec (Finland) Oy, 02230 Espoo (FI)
(72) Inventor: Näslund, Bengt-Olof, 903 64 UMEÅ (SE)
(74) Representative: Zacco Sweden AB

(56) References cited:
- WO-A1-2006/001780
- WO-A1-2007/097573
- JP-A- 2007 315 324
- US-A- 4 203 906
- US-A- 5 845 703
- US-A1- 2008 071 100

## Description

### Field of invention

The invention relates to a heat exchange system for heating a collector medium.

The invention also relates to a process and a dryer for heating a collector medium.

The invention also relates to a bio energy combine and use of the heat exchange system.

### Background

Indirect heating of a collector medium is very energy consuming and costly. Indirect heating is typically carried out by a heat exchanger where heat is transferred from a liquid or gas via heat conducting surfaces to a flow of collector medium conveyed through to the heat exchanger. Furthermore, there is also a significant pressure drop over such a heat exchanger which influences the energy consumption of the process where heating of a collector medium is carried out.

US-A-5845703, US-A-2008071100, US-A-4203906, JP-A-2007315324, WO-A-2006001780 and WO-A-2007097573 discloses various heat exchangers for indirect heating of a collector medium.

WO-A-2007097573 discloses a heat exchanger system according to the preamble of claim 1.

### Summary of invention

An object of the invention is to provide a heat exchange system for heating of a collector medium wherein accessible energy is utilized in a cost and energy efficient manner. Another object of the invention is to provide a heat exchange system which provides for decreased pressure drop in comparison with having two separate heat exchangers. Another object of the invention is to provide a heat exchange system which has a compact design.

A first aspect of the invention achieves these and other objects by providing a heat exchange system for heating a collector medium according to claim 1.

A second aspect of the invention provides a process for heating a collector medium in a heat exchange system according to claim 17.

One advantage of the invention is that the first heat exchanger and the second heat exchanger are separately supplied with the first and the second heating medium. This enables the utilization of several heat sources to supply the necessary heat for heating the collector medium to a desired temperature. Various industrial environments provide waste heat or superfluous heat; such heat is usually less expensive than heat produced separately for a particular purpose. However the energy content of waste heat or superfluous heat provided from one heat source, taken separately, is sometimes insufficient for heating a collector medium to a desired temperature level. By using waste heat from several heat sources for heating the collector medium, improved utilization of accessible heat is achieved, and the heating process is less expensive. The energy efficiency is also improved since the waste heat or superfluous heat can be used efficiently instead of being released into the environment.

Another advantage is that by arranging both the first heat exchanger and the second heat exchanger within the same housing is only one collector medium inlet and outlet necessary for conducting the collector medium to and through both heat exchangers, as opposed to if the heat exchangers were arranged in separate housings. This has the functional benefit that the pressure drop over each heat exchanger is decreased and the energy consumption of the process where the heat exchange system is implemented is lowered.

Another advantage is that by integrating several heat exchangers in the same housing, the heat exchange system has a compact structure and is easier to fit into different industrial environments.

Another advantage is that by using two heat exchangers can the connecting means which connects the heat exchangers to the heat sources be made in significantly smaller dimensions, as opposed to using only one heat exchanger for heating the collector medium where larger dimensions are necessary to permit larger volumes of flow. Thus the cost efficiency is improved. Further advantageous embodiments of the invention are defined in claims 2-16 and 18-27.

According to one embodiment of the heat exchange system is the first heating medium supplied from a first heat source, and the second heating medium is supplied from a second heat source. This has the advantage that different heat sources and /or different heating medium can be used for heating the collector medium.

According to one embodiment of the heat exchange system are the collector medium flow inlet and the collector medium flow outlet disposed opposite to one another in the housing, in particular are the inlet and outlet disposed at opposite ends of the housing. This has the advantage that the collector medium flow can be conducted essentially straight through the heat exchange system as opposed to changing the direction of the flow which results in a significant increase of pressure drop and energy consumption.

According to one embodiment of the heat exchange system is the first inner section disposed distanced from the second inner section. According to one embodiment of the heat exchange system is an intermediate section disposed between the first heat exchanger and the second heat exchanger. In some applications is the collector medium impure and contains particles of different matter; due to changes in the flow characteristics within the intermediate section are these particles retained in the intermediate section, and can be removed via a closable opening further described below. This has the functional benefit that less particles deposit on the heat conducting surfaces of the second heat exchanger.

According to one embodiment of the heat exchange system comprises the collector medium a gas such as air or steam. According to one embodiment of the heat exchange system comprises the collector medium comprises a liquid such as water or a water containing fluid. The heat exchange system according to the invention is therefore suitable in a many different industrial applications.

According to the invention the first inner section and/or the second inner section are adapted to be pressurized. This enables the inner sections and the heat exchangers to be separately operated with different specific conditions such as pressure and temperature. When both the first heat exchanger and the second heat exchanger are configured as shell and tube heat exchangers, the heat exchange system provides both heat exchangers within the same housing, sharing the same shell, but they are operated with different parameters.

According to one embodiment of the heat exchange system comprises the first heat exchanger an outlet side, and the second heat exchanger comprises an inlet side, wherein the outlet side of the first heat exchanger is disposed essentially opposite to the inlet side of the second heat exchanger. According to another embodiment of the heat exchange system is the system adapted to provide a essentially straight flow path for the collector medium from the collector medium inlet to the collector medium outlet.

This has the advantage that the collector medium flow is conducted essentially straight through the heat exchange system, as opposed to changing direction of the flow, which results in a significant increase of pressure drop and energy consumption.

The heat exchange system is supplied with heat from different heat sources.

The first heating medium and the second heating medium are selected so to provide efficient heat transfer from the accessible heat sources to the heat exchangers. In some applications is it beneficial to supply the same type of heating medium to the first heat exchanger and the second heat exchanger. It has to be noted that in such case are the first heating medium and the second heating medium different from one another in that they disclose different parameters such as pressure and/or temperature. The first heat exchanger is therefore connected to the first heat source via the first connecting means and the second heat exchanger is connected to the second heat exchanger via the second connecting means. Hence said first connecting means are separated from said second connecting means.

It is particularly efficient to use heat exchangers having large heat conducting surfaces such as shell and tube heat exchangers or the like. The first heat exchanger and/or the second heat exchanger comprise any of gas/gas heat exchanger, a liquid/gas heat exchanger, a liquid/liquid heat exchanger or a condenser. The heat exchange system comprises advantageously a combination of different types of heat exchangers. Alternatively are the first heat exchanger and the second heat exchanger of the same type.

The principles of a heat exchanger are known since long and there are a large variety of heat exchangers available on the market. The skilled person can select, adapt and integrate commonly known heat exchangers to fit into a heat exchange system according the invention based on information relating to the energy levels in the accessible heat from the heat sources, the selected type of heating medium transferring heat and parameters regarding the collector medium which is to be heated to achieve stepwise heating of the collector medium to a desired temperature level. Moreover, also connecting means, fittings and pipes and other additional equipment are selected and adapted to be suitable for conveying the first heating medium and the second heating medium.

According to another embodiment of the heat exchange system comprises the first heating medium and/or the second heating medium a compressible medium such as steam, hot flue gases or hot industrial gases. If the heating medium is a compressible medium, it is advantageous to configure the heat exchanger as a shell and tube heat exchanger.

One embodiment of the process comprises supplying different types of heating medium to the first heat exchanger and the second heat exchanger. Thus, one type of heating medium is supplied to the first heat exchanger and a different type of heating medium is supplied to the second heat exchanger. In one example comprises the first heating medium thermal oil and the second heating medium comprises hot flue gases.

An alternative embodiment of the process comprises supplying the same type of heating medium to the first heat exchanger and the second heat exchanger. Thus the first heating medium and the second heating medium comprise the same type of medium, such as steam. However, it is to be noted that in such case differs the pressure and/or temperature between the first heating medium and the second heating medium.

According to the invention the first heat exchanger and the second heat exchanger comprises a condenser. In case the first heating medium and/or second heating medium comprises a condensable medium such as steam, is/are the respective heat exchanger configured as a shell and tube condenser.

According to one embodiment of the process comprises the first heat source and/or the second heat source a steam turbine. It is advantageous to supply heat from a steam turbine, it is particularly energy efficient since the heat exchanger is then designed as condenser and transfers heat to the collector medium while condensing the steam. It is further to be noted that the heating medium, pressurized steam, is advantageously extracted from the steam turbine at different steam pressure levels which also improves the thermal efficiency of the steam turbine.

According to the invention, a first condensate receptacle is connected to the first heat exchanger for collecting a first heating medium condensate, and a second condensate receptacle is connected to the second heat exchanger for collecting a second heating medium condensate.

According to the invention, the second condensate receptacle is further connected to the first condensate receptacle.

According to the invention, the first condensate receptacle is connected to the first heat exchanger via a steam duct.

This improves the energy efficiency of the heat exchange system, which will be further explained below.

According to one embodiment of the heat exchange system are the area of the cross section of the outlet side of the first heat exchanger and the area of the cross section of the inlet side of the second heat exchanger essentially corresponding.

According to another embodiment of the heat exchange system is the cross section area of the intermediate section essentially constant over the whole length of the section.

This has the advantage that the intermediate chamber and the outlet side of the first heat exchanger and the inlet side of the second heat exchanger have corresponding cross section area which provides for improved flow characteristics and decreases the pressure drop over the serially arranged heat exchangers.

According to one embodiment of the heat exchange system is the intermediate section of the housing bent such that the first and second heat exchanger are perpendicular disposed to one another. According to one embodiment of the heat exchange system is the housing essentially U-formed such that the first and the second heat exchanger are disposed in parallel to one another. This provides for a compact design of the heat exchange system.

The first heating medium and the second heating medium are advantageously supplied at substantially different heating medium temperatures. According to one embodiment comprises the process supplying the first heating medium at a first heating medium temperature t1, and supplying the second heating medium at a second heating medium temperature t2, wherein t2 differs substantially from t1. The second heating medium temperature t2 is considered to be different from the first heating medium temperature t1 when the second heating medium temperature t2 falls outside a temperature range of plus or minus 0.5 degree Celsius of said first heating medium temperature t1.

According to another embodiment is the second heating medium temperature t2 preferably higher than the temperature of the first heating medium temperature t1. The second heating medium temperature is at least 0.5 degrees Celsius above the first heating medium temperature t1. This has the effect that the collector medium is heated stepwise in the heat exchange system.

According to another embodiment of the process is the second heating medium temperature t2 at least 3 degrees Celsius above said first heating medium temperature t1.

According to another embodiment of the process is the second heating medium temperature t2 at least 10 degrees Celsius above said first heating medium temperature t1.

According to an alternative embodiment comprises the process supplying the first heating medium at a first heating medium temperature t1, and supplying the second heating medium at a second heating medium temperature t2, wherein t2 is essentially equal to t1, thus the second heating medium temperature t2 essentially corresponds to the first heating medium temperature t1.

The second heating medium temperature t2 is considered to be equal to the first heating medium temperature t1 when the second heating medium temperature t2 falls within a temperature range of plus or minus 0.5 degree Celsius of said first heating medium temperature t1. The stepwise heating effect is also achieved when the second heating medium temperature t2 is essentially equal to the first heating medium temperature t1.

According to one embodiment comprises the process supplying the first heating
medium at a first heating medium pressure P1, and supplying the second heating medium at a second heating medium pressure P2, wherein P2 differs substantially from P1. The second heating medium pressure P2 is considered to be different from the first heating medium pressure P1 when the second heating medium pressure P2 falls outside a pressure range of plus or minus 0.5 Bar of said first heating medium pressure P1.

Preferably is the second heating medium pressure P2 higher than the first heating medium pressure P1. According to another embodiment of the process is the second heating medium pressure P2 at least 1 Bar above said first heating medium pressure P1.

According to an alternative embodiment comprises the process supplying the first heating medium at a first heating medium pressure P1, and supplying the second heating medium at a second heating medium pressure P2, wherein P2 is essentially equal to P1, thus the second heating medium pressure essentially corresponds to the first heating medium pressure. The second heating medium pressure P2 is considered to be equal to the first heating medium pressure P1 when the second heating medium pressure P2 falls within a pressure range of plus or minus 0.5 Bar of said first heating medium pressure P1.

According to another embodiment comprises the process extracting the first heating medium from a steam turbine at a first heating medium pressure P1 and extracting the second heating medium from the same steam turbine at a second heating medium pressure P2, wherein P1 is lower than P2. The first heating medium pressure P1 is advantageously within the pressure range 5-20 Bar and the second heating medium pressure P2 is advantageously selected in the pressure range 15-30 Bar.

The heat exchange system is suitable for heating a collector medium such as a gas or liquid. The heat exchange system is particularly suitable for heating a pressurized gas such as pressurized steam. The heat exchange system is also suitable for heating a liquid such as pure water or any water containing liquid such as condensate.

Furthermore, the invention also relates to a dryer for drying humid material by heat transfer from a collector medium, a drying medium, such as steam. The heat exchange system efficiently heats the drying medium stepwise by several separately supplied heating medium. In particular the compact construction of the heat exchanging system allows for smaller dimension of the dryer.

Furthermore the invention also relates to a bio energy combine according to one of claim 28-32.

The bio energy combine comprises a steam generation plant and a dryer according to the invention. The steam generation plant comprises at least one steam turbine. The steam turbine is connected to the first heat exchanger and/or the second heat exchanger of the dryer for supplying steam as heating medium to the dryer.

According to one embodiment comprises the bio energy combine a steam heat exchanger.

According to one embodiment of the bio energy combine comprises the dryer a surplus steam outlet, and the steam heat exchanger is connected to the surplus steam outlet for recovering the heat in the surplus steam from the dryer.

According to another embodiment of the bio energy combine comprises the steam turbine at least a first steam outlet and at least a second steam outlet.

According to another embodiment of the bio energy combine is the steam turbine provided with at least a first steam inlet and at least a second steam inlet.

According to a further embodiment of the bio energy combine is the steam heat exchanger connected to the second steam inlet of the steam turbine for supplying clean steam to the steam turbine.

The invention also relates to a use of a dryer in combination with a steam generation plant. According to one embodiment of the invention is the dryer used in combination with a steam generation plant comprising a combustion chamber and/or at least one power generating steam turbine.

The invention also relates to use of the heat exchange system in a bio energy combine according to claim 33.

The invention also relates to use of the heat exchange system in a steam dryer according to claim 34.

The invention also relates to use of the heat exchange system in a steam power plant according to claim 35.

The invention also relates to use of the heat exchange system in a steam generation plant according to claim 36.

The present invention is defined by the appended independent claims. Various embodiments of the invention are set forth by the appended dependent claims as well as by the following description and the accompanying drawings. The invention is not to be regarded as being limited to the embodiments described above, the embodiments can be combined in various ways, a number of additional variants and modifications being possible within the scope of the subsequent patent claims.

### Brief description of figures

Further objects, features and advantages of the present invention will appear from the following detailed description of the invention, wherein embodiments of the invention will be described in more detail with reference to the accompanying drawings, in which:
Fig. 1 a shows a schematic view of a heat exchange system 1 according to the invention.
Fig. 1b shows a schematic side view of the heat exchange system 1 according to the invention.
Fig. 2a shows the heat exchange system 1 of Fig.1 where one side of housing wall is removed.
Fig. 2b shows a heat exchange system 1' according to the invention.
Fig. 3a shows a heat exchange system 1" according to the invention.
Fig. 3b shows another embodiment of the heat exchange system 1" according to the invention.
Fig. 4 shows a schematic view of a dryer comprising the heat exchange system according to the invention.
Fig. 5 shows a schematic flow scheme of a bio energy combine 200 comprising a dryer according to the invention.
Fig. 6 shows a schematic flow scheme of a bio energy combine 200' comprising a dryer according to the invention.

### Detailed description

Embodiments of the present invention will hereinafter be described in more detail with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

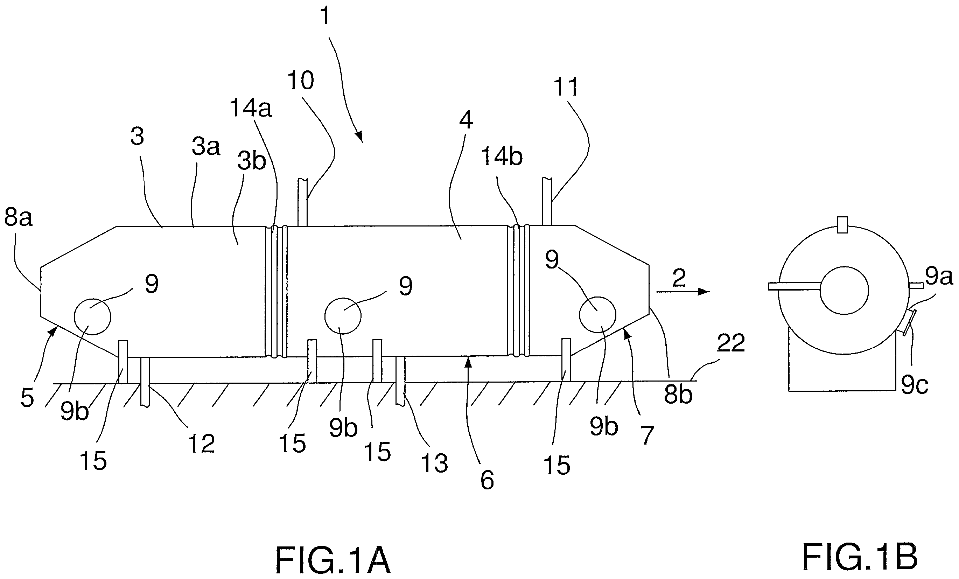

Fig. 1 a shows a schematic view of a heat exchange system 1 according to the invention. The heat exchanger system 1 for heating a collector medium 2 comprises a housing 3. The housing 3 comprises an elongated body 4 divided into a first portion 5, an intermediate portion 6 and a second portion 7. The heat exchange system 1 further comprises first connecting means 10 and second connecting means 11. The first connecting means 10 connects the heat exchange system 1 to a first heat source 20, and the second connecting means 11 connects the heat exchange system 1 to a second heat source 21.

The cross section perpendicular to the axial direction of the housing 3 is substantially circular. Alternatively may the cross section be nearly-circular, oval, nearly-oval, square, rectangular or combinations thereof. The intermediate portion 6 is arranged between the first portion 5 and second portion 7. The housing 3 comprises also a wall 3a having an external side 3b and an internal side 3c.

The first portion 5 of the housing 3 comprises a collector medium flow inlet 8a and a closable opening 9. The first portion 5 forms an inlet section 5a. The collector medium flow inlet 8a defines a through hole in the housing wall 3a in a first end of the housing 3. A cross section area of the first portion 5 expands from the collector medium flow inlet 8a towards the intermediate portion 6. Alternatively may the cross section and the area of the cross section of the portion 5 be constant along the length of the portion 5 from the collector medium flow inlet 8a to the intermediate portion 6. The inlet section 5a is further described below.

Fig.1b shows a side view of the housing 3 wherein a closable opening 9 is shown. The closable opening 9 is defined by a rim 9a and a through hole 9b which is closable by a pressure tight lid 9c. The closable opening 9 is positioned on the lower side of the first portion 5 towards a supporting surface 22 to enable maintenance of the heat exchange system.

Fig. 1a further shows that the second portion 7 of the housing 3 comprises a collector medium flow outlet 8b and a closable opening 9 similar to the previously described. The second portion forms an outlet section 7a. The collector medium flow outlet 8b defines a through hole in the housing wall 3a in a second end of the housing 3. The area of the cross section of the second portion 7 decreases from the intermediate portion 6 towards the collector medium flow outlet 8b. Alternatively may the area of the cross section of portion 7 be constant along the length of the portion 7 from the intermediate portion 6 to the collector medium flow outlet 8b. The outlet section 7a is further described below.

The intermediate portion 6 of the housing 3 comprises the first connecting means 10, the second connecting means 11, a first heating medium outlet 12, a second heating medium outlet 13, thermal expansion zones 14a, 14b and a closable opening 9 of similar kind as described above.

The cross section and the area of the cross section of the intermediate portion 6 is essentially constant along the whole length of the intermediate portion 6. Alternatively may the cross section area vary across the length of the intermediate portion.

The first connecting means 10 comprises a first heating medium inlet 10a and the second connecting means 11 comprises a second heating medium inlet 11a. The connecting means 10, 11 comprise ducts and couplings for enabling gaseous or fluid communication between the heat exchange system 1 and the first and second heat source 20, 21.

One advantage of the heat exchange system is that the first heat exchanger and the second heat exchanger are separately supplied with the first heating medium and the second heating medium, via the first connecting means and the second connecting means, respectively. Hence the first heat exchanger is supplied with heating medium from a first heat source, and the second heat exchanger is supplied with heating medium from a second heat source.

The first heating medium inlet 10a and second heating medium inlet 11a are located on the upper side of the housing 3. The inlets 10a, 11a define through holes in the wall 3a of the housing. The inlets 10a, 11a further comprise ducts and couplings to enable a pressure-tight connection between the connecting means 10, 11 and the heat exchangers 16c,18c within the inner sections 16,18 of the heat exchange system.

The first heating medium outlet 12 and the second heating medium outlet 13 are located on the lower side of the housing 3. The outlets 12, 13 define through holes in the wall 3a of the housing. The outlets 12, 13 further comprise ducts and couplings to enable a pressure-tight connection between the heat exchangers and external conduits for conveying the first heating medium and the second heating medium from the heat exchangers. Typically are the first heating medium and the second heating medium returned to be reheated by the first a second heat source, respectively. However, depending on the type of heating medium other external heat recovery means are equally possible.

The thermal expansion zones 14a, 14b allows for thermal expansion of the housing 3.

The housing 3 of the heat exchange system 1 furthermore comprises supporting means 15 which supports the heat exchange system on a supporting surface 22.

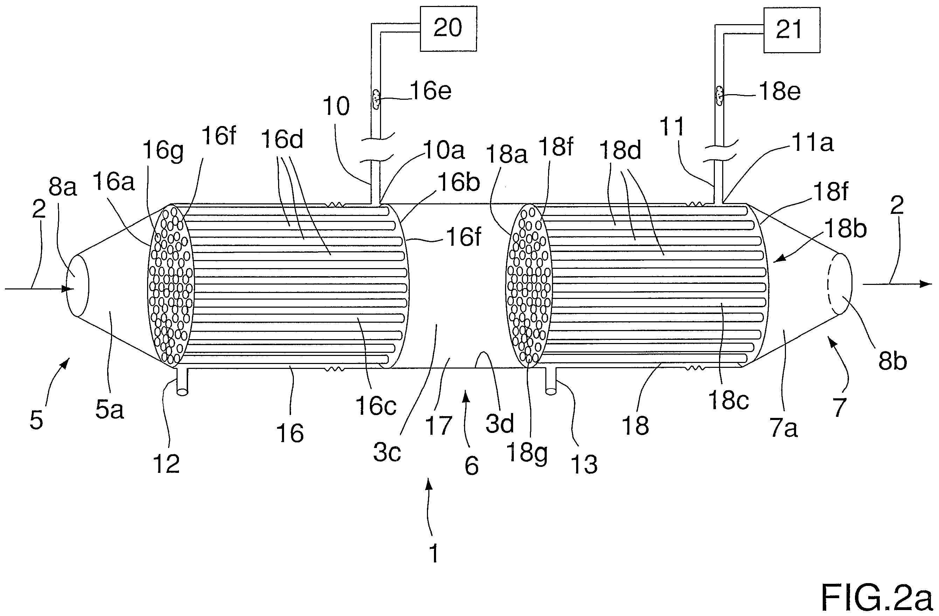

Fig. 2a shows a view of the heat exchange system 1 shown in Fig. 1 where the inside of the housing 3 of the heat exchange system is shown in detail. The inside of the housing 3 is divided into an inlet section 5a, at least a first inner section 16 and at least a second inner section 18, and an outlet section 7a. The inside of the intermediate portion 6 of the housing 3 is divided into at least a first inner section 16 disposed adjacent the inlet section 5a and a second inner section 18 disposed adjacent the outlet section 7a. The first inner section 16 is distanced from the second inner section 18. The housing 3 also comprises an intermediate inner section 17 disposed between the first inner section 16 and the second inner section 18. The inlet section 5a, inner sections 16, 17, 18 and the outlet section 7a are serially disposed within the housing 3 in relation to the flowing direction of the collector medium. The inlet section 5a, the intermediate inner section 17 and the outlet section 7a communicate with one another via a collector medium flow path. Thus the specific conditions of the collector medium such as temperature and pressure determines the conditions in these communicating sections.

The inlet section 5a is delimited by the collector medium flow inlet 8a, the internal side of the housing wall 3c and a channel plate 16f positioned at an inlet side16a of a first heat exchanger 16c. The inlet section 5a divides and feeds the collector medium over the channel plate 16f and into the associated longitudinal channels defining a collector medium flow path.

The first inner section 16 comprises a first heat exchanger 16c having an inlet side 16a and an outlet side 16b. The first inner section 16 corresponds to a first heating step in the heat exchange system 1. The first heat exchanger 16c comprises heat conducting surfaces 16d which conducts heat from a first heating medium 16e to the collector medium 2.

The heat conducting surfaces 16d comprise a plurality of longitudinally extended, straight open channels, i.e. tubes. Each channel is provided with a channel inlet and a channel outlet at opposite ends of the channel. The channels extend between the inlet side 16a and the outlet side 16b. The channels 16d comprises heat conducting material for transferring heat from the heating medium to the collector medium.

The inlet and outlet sides 16a, 16b comprise channel plates 16f disclosing a plurality of through bores 16g; the number and position thereof corresponding to those of the longitudinal channels 16d. Each channel inlet and outlet are connected to the channel plates. The channels 16d thereby define a collector medium flow path through the heat exchanger 16c and the inner section 16.

The first heat exchanger 16c and the first heat conducting surfaces, the channels 16d are selected and adapted to the conditions of the first heating medium 16e supplying heat from a first heat source 20 to achieve efficient heat transfer.

The first inner section 16 is delimited by the inner wall 3c of the housing, the channel plates16f are positioned at the inlet side 16a and the outlet side 16b, and the channels 16d providing the collector flow path through the first heat exchanger 16c. The first heat exchanger 16c within the first inner section 16c is adapted to be operated with a different pressure and/or temperature than the operating pressure in the adjacent sections inside the heat exchange system.

Thus the channel plates 16f are adapted to be pressure tight connected to the inner wall 3c, the channels 16d are pressure-tight connected to the channel plates 16f and all other related connecting means are configured to be pressured-tight to enable the first inner section 16 and the heat exchanger 16c to be pressurized differently than adjacent sections.

The second section 18 is configured in a similar manner. The second section 18 comprises the second heat exchanger 18c of the heat exchange system 1. The second heat exchanger 18c has an inlet side 18a and an outlet side 18b. The second section corresponds to a second heating step in the heat exchange system 1.

The second heat exchanger 18c comprises heat conducting surfaces 18d which conducts heat from a second heating medium 18e to the collector medium 2.

The heat conducting surfaces 18d also comprise a plurality of longitudinally extended, straight open channels 18d made of a heat conducting material.

The channels 18d extend between the inlet side 18a and the outlet side 18b. The inlet and outlet sides 18a, 18b comprise channel plates 18f disclosing a plurality of through bores 18g; the number and position thereof corresponding to those of the longitudinal channels 18d. Each channel inlet and channel outlet are connected to the channel plates 18f. The channels 18d thereby define a collector medium flow path through the second heat exchanger 18c. The second heat exchanger 18c and the heat conducting surfaces 18d are selected and adapted to the second heating medium 18e supplying heat from a second heat source 21 to achieve efficient heat transfer.

The second inner section 18 is delimited by the inner wall 3c of the housing, the channel plates 18f positioned at the inlet side 18a and the outlet side 18b, and the channels 18d providing the collector medium flow path through the second heat exchanger 18c. The second heat exchanger 18c within the second inner section 18 is also adapted to be operated with a different pressure and/or temperature than adjacent sections of the heat exchange system. Hence, corresponding pressure-tight adaptations of the channel plates 18f, the channels 18d and all other related connecting means are necessary to enable the second inner section 18 and the heat exchanger 18c to be pressurized differently than adjacent sections.

The first heat exchanger 16c and the second heat exchanger 18c share the same housing 3, thus they share the same shell, of the heat exchange system 1. However, the pressure-tight connections and adaptations of the inner section 16, 18 enables the first heat exchanger 16c and the second heat exchanger 18c to be operated with different specific operating parameters.

The heat exchange system 1 shown in Fig 1a, 1b and Fig. 2a provides an essentially straight flow path for the collector medium from the collector medium flow inlet to the collector medium flow outlet.

A heat exchanger of this type is known as a shell and tube heat exchanger. It is particularly advantageous when heating or cooling large amounts of fluid. Due to the design this type of heat exchanger offer a large heat transfer area and provide high heat transfer efficiency. There are different types of shell and tube heat exchangers such as counter-current type, cocurrent type or cross-current type. The heating medium flows from the heating medium inlet to the heating medium outlet, on the shell side of the channels, to enable conductive heat transfer between the heating medium and the collector medium.

It is to be noted that the present invention is not limited to the counter-current type showed in Fig. 2a but may be of other types too.

The cross section and shape of the channels, the tubes, may be varied to increase the heat conducting surface. It should be added that the present invention is not limited to the channels in figure 2a disclosing circular cross-section. On the contrary, a channel may have a cross-section that is circular or oval as well as partly circular and/or partly oval, or that is triangular, quadratic, rectangular or otherwise polygonal, or a cross-section that is a combination of these examples.

Alternatively may the heat exchangers be of other types and the heat conducting surfaces may comprise coils, plates, fins or other type of surfaces which have high heat transfer efficiency.

The outlet section 7a is delimited by the channel plate 18f positioned at the outlet side 18b of the second heat exchanger, the inner wall 3c of the housing and the collector medium flow outlet 8b. The outlet section 7a collects the collector medium from the channel plate 18f positioned at the second outlet side 18b, and discharges the collector medium from the heat exchange system 1 via the collector medium flow outlet 8b.

The heat exchanger system 1 comprises the first connecting means 10 for connecting the first heat exchanger 16c to a first heat source 20 to supply a first heating medium 16e to the first heat exchanger. The heat exchanger system 1 furthermore comprises the second connecting means 11 for connecting the second heat exchanger 18c to a second heat source 21 to supply a second heating medium 18e to the second heat exchanger 18c.

The first and the second connecting means 10, 11 comprises ducts and couplings for connecting the first and the second heat exchanger 16c,18c to the first and the second heat source 20,21, respectively.

Fig. 2a shows that the housing 3 of the heat exchange system 1 is configured such that the outlet side 16b of the first heat exchanger 16c is disposed distanced apart from the inlet side 18a of the second heat exchanger 18c. In particular, the outlet side 16b and the inlet side 18a are facing one another, more particularly the outlet side 16b and the inlet side 18a are disposed essentially opposite to one another. Furthermore, the outlet side 16b and the inlet side 18a are centered in relation to one another to enable efficient flow of collector medium 2 through the heat exchange system. The intermediate section 17 is disposed between the outlet side 16b and the inlet side18a.

The area of the cross section of the outlet side 16b of the first heat exchanger 16c advantageously corresponds to the area of the cross section of the inlet side 18a of the second heat exchanger 18c.

A portion of the internal side 3c of the housing wall 3a encloses the intermediate section 17 and is hereafter referenced 3d. The cross section of the internal side 3d of the housing wall enclosing the intermediate section 17 is preferably essentially the same along the whole distance, the whole length, between the outlet side 16b of the first heat exchanger 16c and the inlet side 18a of the second heat exchanger 18c.

However, the cross section of the internal side 3d of the housing wall may alternatively expand or decrease. The intermediate section 17 thus defines a cavity through which the flow of collector medium 2 is conveyed. The cavity is delimited by the internal side 3d of the housing wall and the outlet side 16b and the inlet side18a. The intermediate section also comprises a closable opening 9 similar to the previously described. The intermediate section has several functional benefits.

The cross section area of the intermediate section 17 is essentially the same over the whole length of the cavity, thus the pressure drop over the heat exchange system 1 according to the invention is less in comparison to an arrangement where two separate heat exchangers are serially connected and the cross sectional area increases and decreases over each heat exchanger. In case the collector medium 2 comprises dust loaded air or steam carrying particles, are the particles retained in the intermediate section 17 due to changes in the flow characteristics. The particles are collected in the intermediate section and are removed via the closable opening 9 in the lower part of the internal side 3d of the housing wall. Thus, less particles deposit on the second heat conducting surfaces 18d of the second heat exchanger 18c. Another benefit of the intermediate section 17 is that there is no direct contact between the first heat exchanger 16c and the second heat exchanger18c.

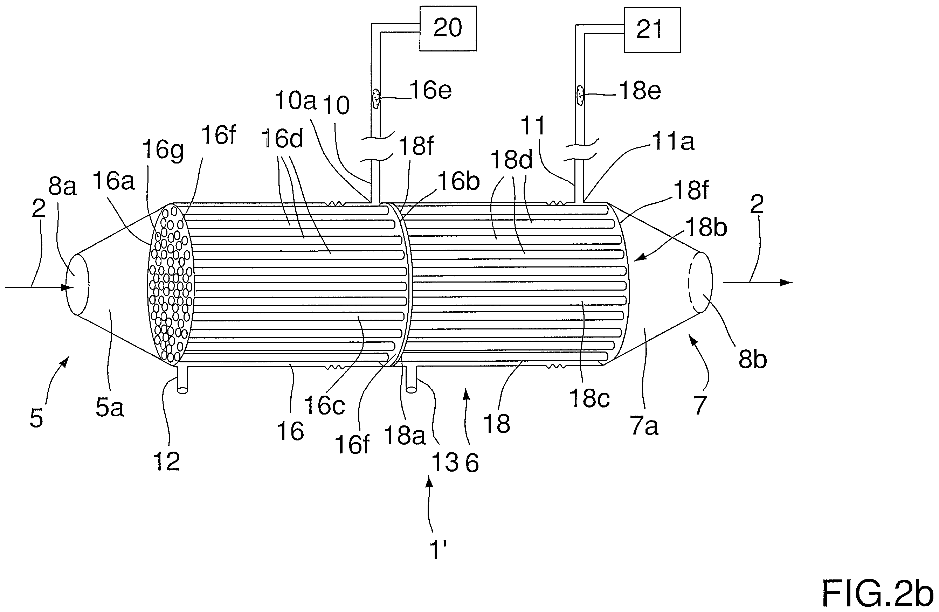

Fig. 2b shows a heat exchange system 1' according to the invention. The heat exchange system 1' differs from the previously described heat exchange system 1 in that the first and second inner section with the first and second heat exchanger are arranged next to each other within the housing 3. The heat exchange system 1' has a particularly compact design.

The outlet side 16b of the first heat exchanger 16c and the inlet side 18a of the second heat exchanger 18c are arranged next to each other to allow efficient flow of the collector medium 2 through the heat exchange system 1'. Alternatively is the channel plate 16f on the outlet side 16b and the channel plate 18f on the inlet side 18a substituted by a joint channel plate which is adapted to be pressure tight connected towards both the first inner section 16 and the second inner section 18, such that the inner sections can be operated at different pressures (not shown in figure). The heat exchange system 1' is particularly suitable for heating a collector medium 2 comprising a liquid such as a condensate.

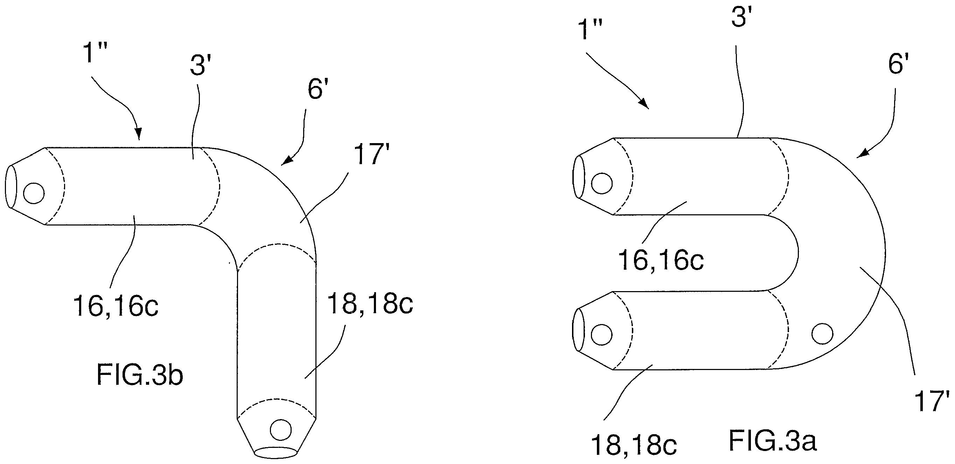

Fig. 3a schematically shows a heat exchange system 1" according to the invention. The heat exchange system 1 "differs from the previously described heat exchange system 1 in that the intermediate portion 6' is bent to adapt the heat exchange system for implementation in specific locations where space is limited. The first and second inner sections 16, 18 and the first and second heat exchanger 16c,18c inside the intermediate portion 6' are configured like in the previously described heat exchange system 1. The intermediate section 17' of the intermediate portion 6' is bent, curved, such that the housing 3' is essentially U-formed and the axial direction of the first inner section 16 and the axial direction of the second inner section 18 are essentially parallel. The cross- section area of the intermediate section is essentially constant. The cross-section area of the outlet 16b and the cross-section area of the inlet 18a are essentially corresponding to achieve good collector medium flow characteristics.

Fig. 3b shows another embodiment of the heat exchange system 1" where the intermediate section 17' is bent, curved, such that the axial direction of the first inner section 16 is perpendicular to the axial direction of the second inner section 18. The heat exchange system 1" is arranged horizontally or vertically. The supporting structure 15 is adapted accordingly.

The first connecting means 10 and the second connecting means 11 are separate and independent from each other to enable the supply of the first heating medium and the second heating medium with different parameters such as temperature or pressure to the heat exchange system 1;1';1".

The temperature of the collector medium 2 is stepwise increased to a desired temperature level by indirect heat transfer from the first heating medium 16e and the second heating medium 18e via the first heat conducting surfaces 16c and the second heat conducting surfaces 18d, respectively.

As previously mentioned, the first heating medium 16e and/or the second heating medium 18e contains a non-compressible medium such as thermal oil or hot water or a compressible medium such as steam or hot flue gases. Advantageously contains the first heating medium 16e a different type of medium than the second heating medium 18e; alternatively contains the first heating medium and the second heating medium the same type of medium.

In such case are the parameters of the first and second heating medium different. In case the heating medium contains steam is the receiving heat exchanger designed as a condenser. The temperature and pressure of the first heating medium16e and of the second heating medium 18e are controlled, measured, at the first and second heat source 20, 21 and/or at the first and second heating medium inlet 10a, 11a of the first and second heat exchanger 16c,18c.

It is to be noted that invention is not limited to the heat exchange system 1;1'
;1" comprising two heat exchangers. The skilled person readily understands from this specification that the housing 3;3' of the heat exchange system 1;1';1" may additionally comprise a third heat exchanger or even a fourth heat exchanger for indirectly heating of collector medium (not shown in figures). The further heat exchangers are configured in similar manners as the previously described first and second heat exchanger. Heat is thereby supplied via a third heating medium and possibly a fourth heating medium to the heat exchange system.

The heat exchange system 1; 1';1" is manufactured to be delivered in one piece. The housing 3;3', the shell, is configured such that the first and the second heat exchanger 16c; 18c are integrated inside the housing.

Alternatively is the heat exchange system 1; 1';1" delivered in several pieces which are assembled on the location where the system is intended to be used. The first portion 5 and the second portion 7 are delivered separately. The first inner section 16, the intermediate section 17 and the second inner section 18 of the intermediate portion 6 are also manufactured to be delivered separately. In such case are all pieces provided with flanges and connecting means to achieve a pressure tight housing wall and shell.

The heat exchange system 1; 1';1" are particularly suitable to be implemented in applications which require indirect heating of large volumes of collector medium. The heat exchange system 1;1';1" is preferably supplied by heat from different heat sources like combustion chamber or a turbine such as a steam turbine, a gas turbine or an expander turbine. Alternatively is the heat exchange system supplied by heat from a heat source like a power generating steam turbine in a steam generation plant or an industrial plant like a smelting plant or a paper and pulp plant or the like.

In operation is the heat exchange system 1;1" connected into an industrial process where indirect heating of a collector medium is required, such as a drying process. The heat exchange system operates as follows: A collector medium flow 2 is conducted via the collector medium flow inlet 8a into the housing 3 by a ventilator or turbo machine.

A first heating medium 16e is supplied to the first heat exchanger 16c from a first heat source 20, and a second heating medium 18e is supplied to the second heat exchanger 18c from a second heat source 21. The collector medium 2 is conveyed to the first heat exchanger 16c where the collector medium is indirectly heated by the first heating medium16e followed by conveying the collector medium to the second heat exchanger where the collector medium is indirectly heated by the second heating medium 18e. The collector medium 2 is thereafter discharged from the housing via the collector medium flow outlet 8b.

The first heat exchanger and the second heat exchanger of the heat exchange system are supplied by heat from accessible heat sources, such as turbines or combustion chambers or other available heat sources like industrial processes producing waste heat or superfluous heat. The heat exchangers and the heat conducting surfaces are adapted accordingly. In case the heating medium comprises steam are the heat exchanger/s designed as condenser/s. Thus the collector medium is stepwise indirectly heated by the separately supplied first heating medium and second heating medium.

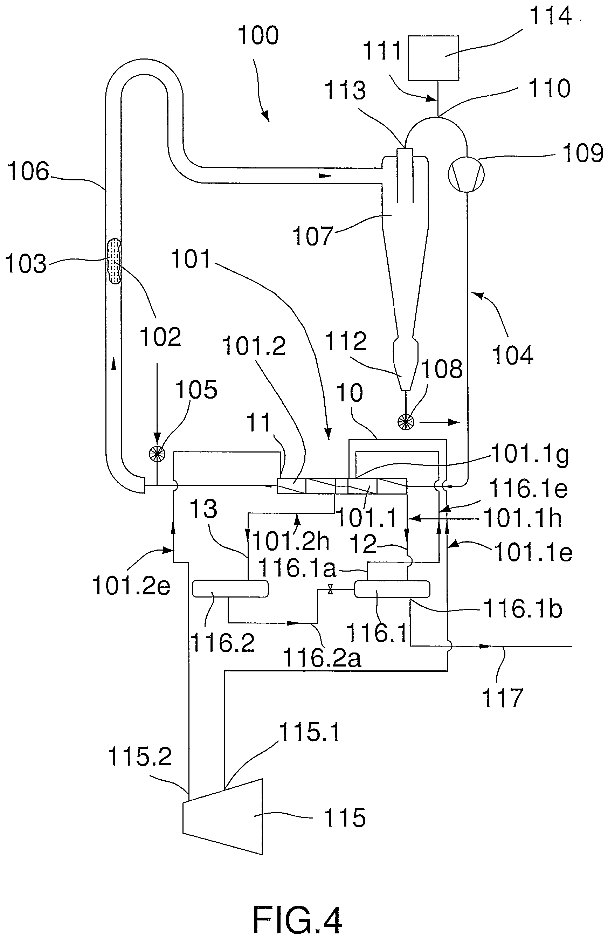

Fig. 4 shows a flow scheme of a dryer 100 comprising a heat exchange system 101 according to the invention. The dryer comprises a pneumatic steam dryer 100 which is particularly suitable for drying wet bulk material 102 such as biomass of wood based bulk material, peat or agricultural material by heat transfer from a drying medium 103 such as steam. The dryer is particularly suitable for drying wood chips or sawdust.

The dryer 100 is preferably designed with a substantially closed circulation conduit 104 to limit the energy consumption for drying of the material and to minimize emissions from the dryer.

A heat exchange system 101 is connected to the closed circulation conduit 104 and provides for indirect stepwise heating of the drying medium 103 by at least two separately supplied heating medium.

In operation of the pneumatic steam dryer, the circulation conduit 104 is pressurized and filled with drying steam such as superheated or saturated steam, thereby forming a essentially oxygen free, inert, internal environment which prevents hazardous dust explosions. The oxygen content is preferably below 2%, more preferably below 0,5%.

The heat exchange system 101 typically superheats the drying steam. This means that at a specific operating pressure inside the dryer is the steam heated by the heat exchange system 101 to a temperature above the saturation temperature of the drying steam 103.

The drying steam 103 is impure and contains particles, terpens and hydrocarbons. These substances are collected by condensation in separate energy recovery means 114 connected to the dryer 100. The energy recovery means are further described below.

The dryer 100 is operated above or below atmospheric pressure. Advantageously is the dryer operated at an overpressure of 0,5-10 Bar. In particular when material of wooden origin like wood chips or saw dust is dried in the dryer, it advantageous to operate the dryer at an overpressure of 1-6 Bar, more preferably at an overpressure of 2-5 Bar. This pressure range corresponds to steam saturation temperatures of about 102-260 degrees Celsius.

The circulation conduit 104 and other elements of the dryer are adapted accordingly.

The dryer further comprises an inlet feeding device 105, a drying chamber 106, separating means 107, a discharge device 108, a ventilator 109 and a surplus steam outlet 110.

An inlet feeding device 105 feeds bulk material 102 into a flow of drying steam 103. The inlet feeding device 105 is connected to the circulation conduit 104 downstream of the heat exchange system 101 in relation to the flow direction of the drying steam.

A drying chamber 106 such as a drying conduit is connected to the circulation conduit 104 between the inlet feeding device 105 and the separating means 107. The bulk material is dried by heat transfer from the drying steam 103 in the drying chamber 106 while being pneumatically conveyed to the separating means 107. Moisture and volatiles such as hydrocarbons in the wet bulk material 102 evaporates and forms surplus steam 111. The temperature of the superheated drying steam 103 decreases and consequently is the moisture content of the bulk material reduced. The drying chamber 106 may alternatively comprise a drum drier or a fluidized bed dryer or similar drying chambers which can be connected into the circulation conduit and wherein material may be efficiently dried by transferring of heat from drying steam.

Separating means 107 comprises a cyclone which is connected to the circulation conduit 104 downstream of the drying chamber in relation to the flow direction of the drying steam. The cyclone 107 separates the dried bulk material from the drying steam in one single step. The cyclone 7 further comprises a bulk material outlet 112 and a drying medium outlet 113.

The cyclone 107 discharges the dried bulk material from the dryer via a discharging device 108 and the separated drying steam 103 is recirculated from the cyclone 107 via the drying medium outlet 113 to the heat exchange system 101. A surplus steam outlet 110 is connected to the circulation conduit 104 for releasing surplus steam 111 evaporated from the bulk material to energy recovery means 114 connected to the dryer 100.

The energy recovery means 114 comprises a steam regenerator or condenser. In the steam regenerator or condenser the surplus steam is cooled and depleted, whereby clean steam and waste condensate is generated.

A ventilator 109 is connected to the circulation conduit for generating a flow of drying steam 103 through the dryer 100 and to pneumatically transport the bulk material from the inlet feeding device 105 to the cyclone 107.

The drying steam is stepwise heated in the heat exchange system 101. The heat exchange system is 101 is connected to the circulation conduit downstream of the separating means 107 and upstream of the inlet feeding device 105. This has the functional benefit that deposits of bulk material on the heat conducting surfaces are prevented.

The recirculated drying steam from the separating means 107 is typically saturated or slightly superheated. The temperature of the drying steam is increased to a desired temperature level prior to feeding bulk material by the inlet feeding means 105 into the flow of drying steam 103 generated by the ventilator 109.

Features of the heat exchange system 101 which corresponds to features of the previously described heat exchange system 1 are not further described here. Like features are like referenced. The heat exchange system 101 differs from the previously described heat exchange system 1 in that both the first and the second heat exchanger are configured as condenser 101.1; 101.2 and in that the heat exchange system 101 also comprises condensate receptacles 116.1; 116.2 which are described below.

The first and second condenser 101.1; 101.2 are preferably construed as tube and shell heat exchangers, however the heat conducting surfaces are adapted with suitable surfaces and materials for efficient condensation of a first heating medium 101.1e, pressurized steam, and a second heating medium 101.2e, also pressurized steam. The first condenser 101.1 is furthermore configured with a steam duct 101.1g, further described below.

Fig 4. also shows a power generating steam turbine 115. The steam turbine 115 comprises at least a first steam outlet 115.1 and at least a second steam outlet 115.2. The first steam outlet 115.1 releases pressurized steam at a first pressure level P1. The second steam outlet 115.2 releases pressurized steam at a second pressure level P2. The parameters of the pressurized steam released from the first steam outlet 115.1 and the parameters of the pressurized steam released from the second steam outlet 115.2 are different, each steam outlet therefore constitutes a separate heat source. The steam turbine 115 is further connected into an external industry or a steam generation plant (not shown in figure).

The first condenser 101.1 is connected to the first steam outlet 115.1 via first connecting means 10, and the second condenser 101.2 is connected to the second steam outlet 115.2 via second connecting means 11.

Pressurized steam extracted from the steam turbine at a first pressure level P1 is supplied to the first condenser 101.1 via the first connecting means 10. Pressurized steam extracted from the steam turbine at a second pressure level P2 is supplied to the second heat exchanger 101.2 via the second connecting means 11. The first pressure level P1 is lower than the second pressure level P2. For instance is the first heating medium pressure 14 Bar and the second heating medium pressure 22 Bar.

This has the effect that the drying steam 103 is stepwise heated in the heat exchange system 101 while the first and the second heating medium 101.1e; 101.2e, the pressurized steam, condenses or cools down significantly. It is particularly energy efficient to extract heat from a power generating steam turbine 115. Pressurized steam is advantageously extracted from the steam turbine at several points disclosing different pressure levels. The operating conditions of the heat exchangers are thereby optimized and the thermal efficiency of the steam turbine improves. The pressurized steam condenses fully or partially inside the condensers 101.1; 101.2. The level of condensation depends on the temperature of the drying steam 103 which also determines the steam pressure inside each condenser, thus the steam pressure inside the first condenser and the second condenser differs.

The dryer 100 shown in Fig. 4 further comprises a first condensate receptacle 116.1 and a second condensate receptacle 116.2. The first condensate receptacle 116.1 is connected to a heating medium outlet 101.1f of the first condenser 101.1 and collects condensate 101.1h and if any, also the insufficiently condensed first heating medium 101.1e. The steam pressure in the first condensate receptacle 116.1 corresponds to the pressure P1 of the first heating medium. The second condensate receptacle 116.2 is connected to a heating medium outlet 101.2f of the second heat condenser 101.2 and collects the condensate 101.2h and if any, also the insufficiently condensed second heating medium 101.2e. The pressure in the second condensate receptacle 116.2 corresponds to the pressure P2 of the second heating medium 101.2e.

The second condensate receptacle 116.2 is furthermore also connected to and in fluid communication with the first condensate receptacle 116.1 via condensate connecting means 116.2a.

The condensate in the second condensate receptacle 116.2 exhibiting the pressure P2 is conducted to the first condensate receptacle 116.1 exhibiting a lower pressure P1 (P2>P1) via 116.2. This has the effect that the condensate from the second condensate receptacle is depressurized and flash steam 116.1e exhibiting pressure P1 is generated in the first condensate receptacle 116.1.

The first condensate receptacle 116.1 is further connected to the steam duct 101.1g of the first condenser 101.1 via a flash steam connecting means 116.1a. The flash steam 116.1e is thus conducted to the first condenser 101.1 and is recovered in the heat exchange system 101 which further improves the energy efficiency of the dryer 100.

Condensate 117 from the first heating medium 101.1e is conducted from the first condensate receptacle 116.1 via condensate outlet 116.1b to other means for heat recovery; hence the energy efficiency of the dryer is further improved.

It is to be noted that the present invention is not limited to a dryer 100 with a heat exchange system 101 having two separate condensate receptacles 116.1;116.2. The condensate receptacles may be combined in one condensate receptacle unit with several separately arranged pressurized chambers (not shown in figure).

It is also to be noted that the present invention is not limited to an embodiment of the dryer 100 having a heat exchange system 101 comprising a first and a second condenser 101.1; 101.2 and being supplied with heat from a steam turbine having at least two steam outlets.

An alternative embodiment of the dryer 100 comprises a heat exchange system 101 having a first and a second condenser 101.1; 101.2 wherein each condenser is supplied by heat from a separate steam turbine.

An alternative embodiment of the dryer 100 comprises a heat exchange system 101 having a condenser supplied with pressurized steam from a steam turbine and a heat exchanger supplied with flue gases from a combustion chamber. The order of the condenser and the heat exchanger may be varied, depending on the available heat sources.

According to another alternative embodiment of the dryer 100 comprises the heat exchange system 101a condenser 101.1 supplied with pressurized steam from a steam turbine and a heat exchanger 18c supplied with thermal oil from a heat source in an external industrial plant.

The heat exchange system 101 is advantageously supplied with heat from different heat sources like a turbine or a combustion chamber in a steam generation plant or waste heat from an industrial process such as a saw mill, paper and pulp factory, smelting plant or other heavy industry. The heat exchange system may alternatively be supplied from a steam turbine having several steam outlets.

The heat exchange system 101 is implemented in a pneumatic steam dryer 100 for drying bulk material. However, the heat exchange system 101 is suitable to be used in any kind industrial process where indirect heating of a collector medium is required. Naturally the heat exchange system is also suitable to be implemented in dryers for drying other materials.

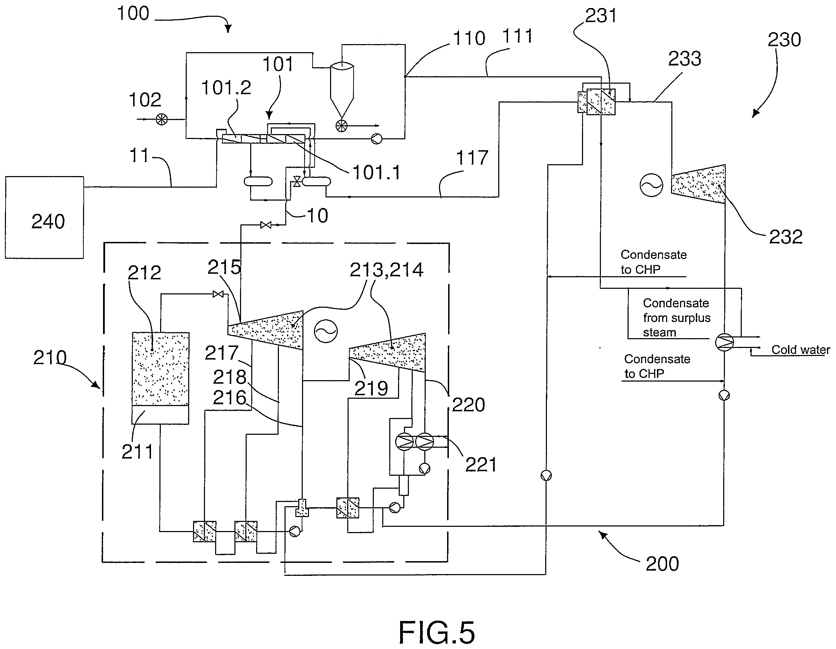

Fig. 5 shows a schematic flow scheme of a first embodiment of a bio energy combine 200 comprising a steam generation plant 210 such as a combined heat and power plant (CHP), a dryer 100 for drying bulk material according to the invention and steam recovery means 230. The combined heat and power plant 210 supplies heat to the dryer 100. Fig. 5 also shows an external industrial plant 220 supplying heat to the dryer 100. Like references are used for like features. The steam generation plant may alternatively comprise a steam power plant or similar power production facility.

The combined heat and power plant 210 comprises a combustion chamber 211, a boiler 212, a first steam turbine 213 and a second steam turbine 214 and heat supply connections to a district heating net 221. The combustion chamber 211 is connected to the boiler 212 and the steam turbines 213; 214. The first steam turbine 213 comprises a first steam outlet 215, a second steam outlet 216, a third steam outlet 217 and a fourth steam outlet 218. Each one of the first, the third and the fourth steam outlet 215,217,218 comprises a bleeder outlet or an extraction outlet. The second steam outlet 216 comprises an exhaust outlet.

The steam recovery means 230 comprises a steam heat exchanger 231 and a low pressure turbine 232.

The dryer 100 comprises a first heat exchanger 101.1 and a second heat exchanger 101.2 and a surplus steam outlet 110. The heat exchangers are preferably shell and tube heat exchangers designed as condensers.

The steam outlet 215 is connected to the first heat exchanger 101.1 via the connecting means 10. The steam turbine 213 supplies pressurized steam at a first pressure level P1 to the first heat exchanger 101.1 to indirectly heat the drying steam 103 in the circulation conduit of the dryer 101. This has the functional benefit that a separate condenser for the operation of the steam turbine 213 is unnecessary. This also improves the thermal efficiency of the steam turbine and the energy efficiency of the combination of the dryer and the steam generation plant. It is particularly beneficial to combine a dryer 100 according to the invention with a combined heat and power plant. Furthermore, the seasonal variations in the demand of power and heat from the combined heat and power plant are met, and seasonal overcapacity of power and heat is made useful in the dryer 1".

The second steam turbine 214 is connected to the second steam outlet 216 of the first steam turbine 213 via a steam inlet 219. The second steam turbine comprises a steam outlet 220 which is configured as an exhaust outlet. The exhausted steam from the steam outlet 220 is condensed in condensers in a district heating net 221.

The steam heat exchanger 231 is connected to a surplus steam outlet 110 of the dryer 100, such that the surplus steam 111 released from the dryer is supplied to and recovered in the steam heat exchanger 231. The steam heat exchanger 231 is connected to a low pressure turbine 232 which receives the clean steam 233 from the steam heat exchanger, the energy from the dryer 100 is thereby recovered in the low pressure turbine 232.

The industrial plant 240 such as a steel factory, a paper and pulp mill or a smelting plant produces a surplus of pressurized steam. The pressurized steam is efficiently used for heating the drying steam in a dryer 100 according to the invention. The industrial plant 240 is connected to the second heat exchanger 101.2 via connecting means 11. Pressurized steam at a second pressure level P2 is thereby supplied from the industrial plant to the second heat exchanger 101.2. The second pressure level P2 is higher than the first pressure level P1.

The drying steam in the circulation conduit of the dryer 100 is thereby stepwise indirectly heated by pressurized steam from two different heat sources.

The dryer 100 produces dried bulk material which is typically used as fuel in combustion chambers in industrial or commercial or domestic applications. The dryer may supply fuel to the combustion chamber in the steam generation plant 210.

The dryer 100 for drying bulk material and carrying out the process according to the invention is thereby used in combination with a steam generation plant 210 comprising a combustion chamber 211 and at least one power generating steam turbine 213.

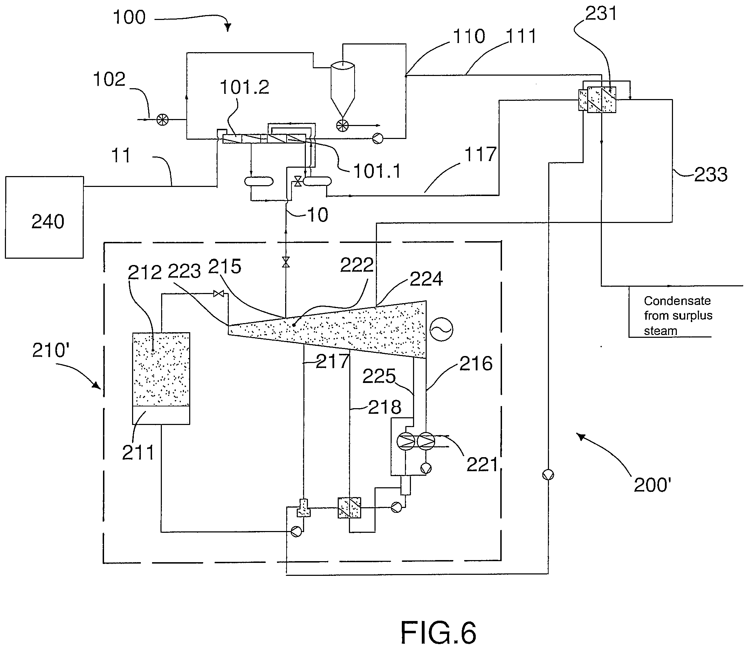

Fig. 6 shows a schematical flow scheme of a second embodiment of a bio energy combine 200'. The bio energy combine 200' comprises a combined heat and power plant 210', a dryer 100 and a steam heat exchanger 231. Like references are used for like features.

The combined heat and power plant 210' differs from the previously described power plant 210 in that it comprises a steam turbine 222. The steam turbine 222 is provided with at least a first steam inlet 223 and at least a second steam inlet 224. The steam turbine 222 is thereby adapted to receive steam from at least two different sources having different steam parameters.

The steam turbine 222 is provided with a first steam outlet 215, a second steam outlet 216, a third steam outlet 217 and a fourth steam outlet 218 and a fifth steam outlet 225. Each one of the first, the third, the fourth and the fifth steam outlet, 215,217,218,225 comprises a bleeder outlet or an extraction outlet. The second steam outlet 216 comprises an exhaust outlet.

The boiler 212 is connected to the first steam inlet 223 of the steam turbine 222 and the steam heat exchanger 231 is connected to the second steam inlet 224 of the steam turbine 222. The steam heat exchanger 231 recovers the surplus steam from the dryer 100 and supplies clean steam 233 to the steam turbine 222. The steam turbine is thereby supplied with steam from two different sources. The steam pressure of the steam supplied to the first steam inlet 223 is higher than the steam pressure of the steam supplied to the second steam inlet 224. This has the advantage that the energy in the surplus steam from the dryer is recovered and the efficiency of the bio energy combine improves.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including", and "contains" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the description should be regarded as illustrative rather than restrictive, and the invention is not limited to the particular embodiments discussed above. It should therefore be appreciated that variations may be made in those embodiments by those skilled in the art without departing from the scope of the present invention as defined by the following claims.

## Claims

1. Heat exchange system (1;1';1";101) for heating a collector medium (2; 103) and comprising a housing (3;3') having a collector medium flow inlet (8a) and a collector medium flow outlet (8b), the housing is divided into at least a first inner section (16) and a second inner section (18), wherein the first inner section (16) and second inner section (18) are serially disposed in the housing (3) in relation to a flowing direction of the collector medium (2), the first inner section (16), comprising a first heat exchanger (16c; 101.1), is disposed adjacent the collector medium flow inlet (8a), the second inner section (18), comprising a second heat exchanger (18c;101.2), is disposed adjacent the collector medium flow outlet (8b), the first heat exchanger (16c;101.1) is supplied with a first heating medium(16e;101.1e), the second heat exchanger (18c;101.2) is supplied with a second heating medium(18e;101.2e) and **characterized in that** the first inner section (16) and/or the second inner section (18) are adapted to be pressurized, that the first and the second heat exchanger are configured as condensers (101.1; 101.2), that the first heat exchanger is supplied with pressurized steam at a pressure level P1 and the second heat exchanger is supplied with pressurized steam at a pressure level P2, and that the pressure level P1 is lower than pressure level P2, and that a first condensate receptacle (116.1) is connected to the first heat exchanger (16c; 101.1) for collecting a first heating medium condensate(101.1h) at a pressure level P1, and **in that** a second condensate receptacle (116.2) is connected to the second heat exchanger (18c;101.2) for collecting a second heating medium condensate(101.2h) at a pressure level P2, and **in that** the second condensate receptacle (116.2) is connected to and in fluid communication with the first condensate receptacle (116.1), and **in that** the first condensate receptacle (116.1) is connected to the first heat exchanger (16c;101.1) via a steam duct (101.1g).

2. A heat exchange system according to claim 1 **characterized in that** the first heating medium(16e;101.1e) is supplied from a first heat source, and the second heating medium(18e;101.2e) is supplied from a second heat source.

3. A heat exchange system according to any of the preceding claims **characterized in that** the first heating medium (16e;101.1e) and/or the second heating medium (18e;101.2e) comprise/s a compressible medium such as steam, hot flue gases or hot industrial gases.

4. A heat exchange system according to any of the preceding claims **characterized in that** the collector medium comprises a gas such as air or steam.

5. A heat exchange system according to any of claims 1-4 **characterized in that** the collector medium comprises a liquid such as water or a liquid containing water.

6. A heat exchange system according to any of the preceding claims **characterized in that** the first inner section (16) is arranged next to the second inner section (18).

7. A heat exchange system according to any of the preceding claims 1 or 6 **characterized in that** the first inner section (16) is distanced from the second inner section (18).

8. A heat exchange system according to any of the preceding claims **characterized in that** an intermediate inner section (17') is disposed between the first inner section (16) and the second inner section (18).

9. A heat exchange system according to any of preceding claims **characterized in that** the collector medium flow inlet (8a) and the collector medium flow outlet (8b) are disposed opposite to one another in the housing.

10. A heat exchange system according to any of the preceding claims **characterized in that** the first heat exchanger (16c) comprises an outlet side (16b) and the second heat exchanger (18c) comprises an inlet side (18a) wherein the outlet side (16b) is disposed essentially opposite to the inlet side (18a).

11. A heat exchange system according to any of the preceding claims **characterized in that** the heat exchange system (1;101) is adapted to provide an essentially straight flow path for the collector medium from the collector medium inlet (8a) to the collector medium outlet (8b).

12. A heat exchange system according to any of the preceding claims **characterized in that** the area of the cross section of the outlet side (16b) of the first heat exchanger (16c) and the area of the cross section of the inlet side (18a) of the second heat exchanger (18c) are essentially corresponding.

13. A heat exchange system according to any of the preceding claims **characterized in that** the cross-section area of the intermediate section (17; 17') is essentially constant over the whole length of the section.

14. A heat exchange system according to any of the preceding claims **characterized in that** the intermediate section (17') of the housing (3') is bent.

15. A heat exchange system according to any of the preceding claims **characterized in that** the housing (3') is essentially U-formed.

16. Dryer (100) comprising a heat exchange system (1;1';1";101) according to any of claims 1-15.

17. A process for heating a collector medium (2; 103) in a heat exchange system (1;1';1";101) according to any of claims 1-15, said process comprising the steps of :
- supplying a first heating medium (16e;101.1e) to a first heat exchanger (16c;101.1)
- supplying a second heating medium (18e;101.2e) to a second heat exchanger (18c;101.2e),
- conveying the collector medium (2) to the first heat exchanger (16c;101.1) and indirectly heating the collector medium by the first heating medium (16e; 101.1e) followed by
- conveying the collector medium (2) to the second heat exchanger (18c;101.2e) and indirectly heating the collector medium (2) by the second heating medium (18e;101.2e),
- supplying the first heat exchanger with pressurized steam at a pressure level P1 and
- supplying the second heat exchanger with pressurized steam at a pressure level P2, wherein the pressure level P1 is lower than pressure level P2,
- collecting a first heating medium condensate(101.1h) at a pressure level P1 by a first condensate receptacle (116.1) connected to the first heat exchanger (16c; 101.1),
- collecting a second heating medium condensate(101.2h) at a pressure level P2 by a second condensate receptacle (116.2) connected to the second heat exchanger (18c;101.2),
- conducting pressurized condensate having the pressure P2 from the second condensate receptacle to the first condensate receptacle and generating flash steam and conducting the flash steam to the first heat exchanger.

18. A process according to claim 17 **characterized in** supplying the first heating medium (16e;101.1e) at a first heating medium temperature t1, and supplying the second heating medium (18e;101.2e) at a second heating medium temperature t2, wherein t2 differs substantially from t1.

19. A process according to claim 18 **characterized in that** the second heating medium temperature t2 differs from the first heating medium temperature t1 when the second heating medium temperature t2 falls outside a temperature range of plus or minus 0.5 degree Celsius of said first heating medium temperature t1.

20. A process according to any of the claims 17-19 **characterized in** supplying the first heating medium (16e;101.1e) at a first heating medium temperature t1, and supplying the second heating medium (18e;101.2e) at a second heating medium temperature t2, wherein t2 is essentially equal to t1.

21. A process according to claim 20 **characterized in that** the second heating medium temperature t2 is equal to the first heating medium temperature t1 when the second heating medium temperature t2 falls within a temperature range of plus or minus 0.5 degree Celsius of said first heating medium temperature t1.

22. A process according to any of the claims 17-21 **characterized in** supplying the first heating medium (16e;101.1e) at a first heating medium pressure P1, and supplying the second heating medium (18e;101.2e) at a second heating medium pressure P2, wherein P2 differs substantially from P1.

23. A process according to claim 22 **characterized in that** the second heating medium pressure P2 differs from the first heating medium pressure P1 when the second heating medium pressure P2 falls outside a pressure range of plus or minus 0.5 Bar of said first heating medium pressure P1.

24. A process according to any of the claims 17-23 **characterized in** supplying the first heating medium (16e;101.1e) at a first heating medium pressure P1, and supplying the second heating medium (18e;101.2e) at a second heating medium pressure P2, wherein P2 is essentially equal to P1.

25. A process according to any of the claims 24 **characterized in that** the second heating medium pressure P2 is equal to the first heating medium pressure P1 when the second heating medium pressure P2 falls within a pressure range of plus or minus 0.5 Bar of said first heating medium pressure P1.

26. A process according to any of claims 17-25 **characterized in** supplying the first heating medium (16e;101.1e) and/or the second heating medium (18e;101.2e) from a steam turbine.

27. A process according to any of the claims 26 **characterized in** extracting the first heating medium (101.1e) from a steam turbine (115) at a first heating medium pressure P1 and extracting the second heating medium (1 01.2e) from the steam turbine (115) at a second heating medium pressure P2, wherein P1 is lower than P2.

28. Bio energy combine (200; 200') comprising a steam generation plant (210; 210') and a dryer (100) according to claim 16 **characterized in:**
- **that** the steam generation plant (210;210') comprises at least one steam turbine (29;33;115;222), and in that the steam turbine is connected to the first heat exchanger (16c;101.1) and/or the second heat exchanger (18c;101.2) of the dryer (100) for supplying steam as heating medium to the dryer (101).

29. Bio energy combine according to claim 28 **characterized in that** the dryer (100) comprises a surplus steam outlet (110), and **in that** a steam heat exchanger (231) is connected to the surplus steam outlet (110) for recovering the heat in the surplus steam from the dryer.

30. Bio energy combine according to claims 28 or 29 **characterized in that** the steam turbine (29;33;115;222) is provided with at least a first steam outlet (115.1; 215) and at least a second steam outlet (115.2;216).

31. Bio energy combine according to any of claims 28-30 **characterized in that** the steam turbine (222) is provided with at least a first steam inlet (223) and at least a second steam inlet (224).

32. Bio energy combine according to any of claims 28-31 **characterized in that** the steam heat exchanger (231) is connected to the second steam inlet (224) of the steam turbine (222) for supplying clean steam (233) to the steam turbine.

33. Use of a heat exchange system (1;1';1";101) according to any of claims 1-15 in a bio energy combine (200;200') according to any of claims 29-33.

34. Use of a heat exchange system (1;1';1";101) according to any of claims 1-15 in a steam dryer.

35. Use of a heat exchange system (1;1';1";101) according to any of claims 1-15 in a steam generation plant.

36. Use of a heat exchange system (1;1';1";101) according to any of claims 1-15 in a steam power plant.

## Patentansprüche

1. Wärmetauschersystem (1;1';1";101) zum Erwärmen eines Kollektormediums (2; 103) und umfassend ein Gehäuse (3;3') mit einem Kollektormediumströmungseingang (8a) und einem Kollektormediumströmungsausgang (8b), wobei das Gehäuse in mindestens einen ersten inneren Abschnitt (16) und einen zweiten inneren Abschnitt (18) aufgeteilt ist, wobei der erste innere Abschnitt (16) und der zweite innere Abschnitt (18) im Gehäuse (3) im Verhältnis zur Strömungsrichtung des Kollektormediums (2) seriell angeordnet sind, wobei der erste innere, einen ersten Wärmetauscher (16c; 101.1) umfassende Abschnitt (16) dem Kollektormediumströmungseingang (8a) angrenzend angeordnet ist, der zweite innere, einen zweiten Wärmetauscher (18c;101.2) umfassende Abschnitt (18) dem Kollektormediumströmungsausgang (8b) angrenzend angeordnet ist, der erster Wärmetauscher (16c;101.1) mit einem ersten Heizmedium (16e;101.1e) versorgt wird, der zweite Wärmetauscher (18c;101.2) mit einem zweiten Heizmedium (18e;101.2e) versorgt wird, und **dadurch gekennzeichnet, dass**
der erste innere Abschnitt (16) und/oder der zweite innere Abschnitt (18) dafür eingerichtet ist bzw. sind, unter Druck gesetzt zu werden, dass der erste und der zweite Wärmetauscher als Kondensatoren (101.1; 101.2) ausgelegt sind, dass der erste Wärmetauscher mit Druckdampf bei einem Druckniveau P1 und der zweite Wärmetauscher mit Druckdampf bei einem Druckniveau P2 versorgt wird, und dass das Druckniveau P1 niedriger als Druckniveau P2 ist, und dass ein erster Kondensatbehälter (116.1) mit dem ersten Wärmetauscher (16c; 101.1) zum Sammeln eines ersten Heizmediumkondensats (101.1h) bei einem Druckniveau P1 verbunden ist, und dass ein zweiter Kondensatbehälter (116.2) mit dem zweiten Wärmetauscher (18c;101.2) zum Sammeln eines zweiten Heizmediumkondensats (101.2h) bei einem Druckniveau P2 verbunden ist, und dass der zweite Kondensatbehälter (116.2) mit dem ersten Kondensatbehälter (116.1) verbunden ist und in Fluidverbindung steht, und dass der erste Kondensatbehälter (116.1) mit dem ersten Wärmetauscher (16c;101.1) über einen Dampfkanal (101.1g) verbunden ist.

2. Wärmetauschersystem nach Anspruch 1, **dadurch gekennzeichnet, dass** das erste Heizmedium (16e;101.1e) von einer ersten Wärmequelle zugeführt wird, und das zweite Heizmedium (18e;101.2e) von einer zweiten Wärmequelle zugeführt wird.

3. Wärmetauschersystem nach einem der vorgehenden Ansprüche, **dadurch gekennzeichnet, dass** das erste Heizmedium (16e;101.1e) und/oder das zweite Heizmedium (18e;101.2e) ein komprimierbares Medium wie beispielsweise Dampf, heiße Rauchgase oder heiße Industriegase umfasst bzw. umfassen.

4. Wärmetauschersystem nach einem der vorgehenden Ansprüche, **dadurch gekennzeichnet, dass** das Kollektormedium ein Gas wie beispielsweise Luft oder Dampf umfasst.

5. Wärmetauschersystem nach einem der Ansprüche 1-4, **dadurch gekennzeichnet, dass** das Kollektormedium eine Flüssigkeit wie beispielsweise Wasser oder eine Flüssigkeit, die Wasser enthält, umfasst.

6. Wärmetauschersystem nach einem der vorgehenden Ansprüche, **dadurch gekennzeichnet, dass** der erste innere Abschnitt (16) neben dem zweiten inneren Abschnitt (18) angeordnet ist.

7. Wärmetauschersystem nach einem der vorgehenden Ansprüche 1 oder 6, **dadurch gekennzeichnet, dass** der erste innere Abschnitt (16) mit Abstand von dem zweiten inneren Abschnitt (18) angeordnet ist.

8. Wärmetauschersystem nach einem der vorgehenden Ansprüche, **dadurch gekennzeichnet, dass** ein zwischenliegender innerer Abschnitt (17') zwischen dem ersten inneren Abschnitt (16) und dem zweiten inneren Abschnitt (18) angeordnet ist.

9. Wärmetauschersystem nach einem der vorgehenden Ansprüche, **dadurch gekennzeichnet, dass** der Kollektormediumströmungseingang (8a) und der Kollektormediumströmungsausgang (8b) im Gehäuse einander gegenüberliegend angeordnet sind.

10. Wärmetauschersystem nach einem der vorgehenden Ansprüche, **dadurch gekennzeichnet, dass** der erste Wärmetauscher (16c) eine Ausgangseite (16b) umfasst und der zweite Wärmetauscher (18c) eine Eingangsseite (18a) umfasst, wobei die Ausgangsseite (16b) im Wesentlichen gegenüber der Eingangsseite (18a) angeordnet ist.

11. Wärmetauschersystem nach einem der vorgehenden Ansprüche, **dadurch gekennzeichnet, dass** das Wärmetauschersystem (1:101) dafür eingerichtet ist, einen im Wesentlichen geraden Strömungsweg für das Kollektormedium vom Kollektormediumeingang (8a) zum Kollektormediumausgang (8b) bereitzustellen.

12. Wärmetauschersystem nach einem der vorgehenden Ansprüche, **dadurch gekennzeichnet, dass** die Querschnittsfläche der Ausgangsseite (16b) des ersten Wärmetauschers (16c) und die Querschnittsfläche der Eingangsseite (18a) des zweiten Wärmetauschers (18c) im Wesentlichen übereinstimmend sind.

13. Wärmetauscher nach einem der vorgehenden Ansprüche, **dadurch gekennzeichnet, dass** die Querschnittsfläche des zwischenliegenden Abschnitts (17;17') über die ganze Länge des Abschnitts im Wesentlichen konstant ist.

14. Wärmetauschersystem nach einem der vorgehenden Ansprüche, **dadurch gekennzeichnet, dass** der zwischenliegende Abschnitt (17') des Gehäuses (3') gebogen ist.

15. Wärmetauschersystem nach einem der vorgehenden Ansprüche, **dadurch gekennzeichnet, dass** das Gehäuse (3') im Wesentlichen eine U-Form aufweist.

16. Trockner (100) umfassend ein Wärmetauschersystem (1;1';1";101) nach einem der Ansprüche 1-15.

17. Verfahren zum Erwärmen eines Kollektormediums (2;103) in einem Wärmetauschersystem (1;1';1";101) nach einem der Ansprüche 1-15, welches Verfahren die folgenden Schritte umfasst:
- Zuführen eines ersten Heizmediums (16e;101.1e) zu einem ersten Wärmetauscher (16c;101.1)
- Zuführen eines zweiten Heizmediums (18e;101.2e) zu einem zweiten Wärmetauscher (18c;101.2e),
- Fördern des Kollektormediums (2) zum ersten Wärmetauscher (16c;101.1) und indirektes Erwärmen des Kollektormediums durch das erste Heizmedium (16e; 101.1e) und danach
- Fördern des Kollektormediums (2) zum zweiten Wärmetauscher (18c;101.2e) und indirektes Erwärmen des Kollektormediums (2) durch das zweite Heizmedium (18e;101.2e),
- Versorgen des ersten Wärmetauschers mit Druckdampf bei einem Druckniveau P1 und
- Versorgen des zweiten Wärmetauschers mit Druckdampf bei einem Druckniveau P2, wobei das Druckniveau P1 niedriger als Druckniveau P2 ist,
- Sammeln eines ersten Heizmediumkondensats (101.1h) bei einem Druckniveau P1 mittels eines ersten Kondensatbehälters (116.1), der mit dem ersten Wärmetauscher (16c; 101.1) verbunden ist,
- Sammeln eines zweiten Heizmediumkondensats (101.2h) bei einem Druckniveau P2 mittels eines zweiten Kondensatbehälters (116.2), der mit dem zweiten Wärmetauscher (18c; 101.2) verbunden ist,
- Leiten von druckbeaufschlagtem Kondensat mit Druck P2 von einem zweiten Kondensatbehälter zum ersten Kondensatbehälter und Erzeugen von Entspannungsdampf und Leiten des Entspannungsdampfs zum ersten Wärmetauscher.

18. Verfahren nach Anspruch 17, **gekennzeichnet durch** Zuführen des ersten Heizmediums (16e;101.1e) bei einer ersten Heizmediumtemperatur t1 und Zuführen des zweiten Heizmediums (18e;101.2e) bei einer zweiten Heizmediumtemperatur t2, wobei sich t2 im Wesentlichen von t1 unterscheidet.

19. Verfahren nach Anspruch 18, **dadurch gekennzeichnet, dass** sich die zweite Heizmediumtemperatur t2 von der ersten Heizmediumtemperatur t1 unterscheidet, wenn die zweite Heizmediumtemperatur t2 außerhalb eines Temperaturbereichs von plus/minus 0,5 Grad Celsius der ersten Heizmediumtemperatur t1 liegt.

20. Verfahren nach einem der Ansprüche 17-19, **gekennzeichnet durch** Versorgen des ersten Heizmediums (16e;101.1e) bei einer ersten Heizmediumtemperatur t1 und Versorgen des zweiten Heizmediums (18e;101.2e) bei einer zweiten Heizmediumtemperatur t2, wobei t2 im Wesentlichen t1 gleich ist.

21. Verfahren nach Anspruch 20, **dadurch gekennzeichnet, dass** sich die zweite Heizmediumtemperatur t2 der ersten Heizmediumtemperatur t1 gleich ist, wenn die zweite Heizmediumtemperatur t2 innerhalb eines Temperaturbereichs von plus/minus 0,5 Grad Celsius der ersten Heizmediumtemperatur t1 liegt.

22. Verfahren nach einem der Ansprüche 17-21, **gekennzeichnet durch** Zuführen des ersten Heizmediums (16e;101.1e) bei einem ersten Heizmediumdruck P1 und Zuführen des zweiten Heizmediums (18e;101.2e) bei einem zweiten Heizmediumdruck P2, wobei sich P2 im Wesentlichen von P1 unterscheidet.

23. Verfahren nach Anspruch 22, **dadurch gekennzeichnet, dass** sich der zweite Heizmediumdruck P2 von dem ersten Heizmediumdruck P1 unterscheidet, wenn der zweite Heizmediumdruck P2 außerhalb eines Druckbereichs von plus/minus 0,5 Bar des ersten Heizmediumdrucks P1 liegt.

24. Verfahren nach einem der Ansprüche 17-23, **gekennzeichnet durch** Zuführen des ersten Heizmediums (16e;101.1e) bei einem ersten Heizmediumdruck P1 und Zuführen des zweiten Heizmediums (18e;101.2e) bei einem zweiten Heizmediumdruck P2, wobei P2 im Wesentlichen P1 gleich ist.

25. Verfahren nach einem der Ansprüche 24, **dadurch gekennzeichnet, dass** sich der zweite Heizmediumdruck P2 dem ersten Heizmediumdruck P1 gleich ist, wenn der zweite Heizmediumdruck P2 innerhalb eines Druckbereichs von plus/minus 0,5 Bar des ersten Heizmediumdrucks P1 liegt.

26. Verfahren nach einem der Ansprüche 17-25, **gekennzeichnet durch** Zuführen des ersten Heizmediums (16e;101.1e) und/oder des zweiten Heizmediums (18e;101.2e) von einer Dampfturbine.

27. Verfahren nach einem der Ansprüche 26, **gekennzeichnet durch** Extrahieren des ersten Heizmediums (101.1e) von einer Dampfturbine (115) bei einem ersten Heizmediumdruck P1 und Extrahieren des zweiten Heizmediums (101.2e) von de Dampfturbine (115) bei einem zweiten Heizmediumdruck P2, wobei P1 niedriger als P2 ist.

28. Bioenergiekombinationseinrichtung (200; 200') umfassend eine Dampferzeugungsanlage (210; 210') und einen Trockner (100) nach Anspruch 16, **dadurch gekennzeichnet:**
- **dass** die Dampferzeugungsanlage (210;210') mindestens eine Dampfturbine (29;33;115;222) umfasst, und dass die Dampfturbine mit dem ersten Wärmetauscher (16c;101.1) und/oder dem zweiten Wärmetauscher (18c;101.2) des Trockners (100) zur Zufuhr von Dampf als Heizmedium zum Trockner (101) verbunden ist.

29. Bioenergiekombinationseinrichtung nach Anspruch 28, **dadurch gekennzeichnet, dass** der Trockner (100) einen Überschussdampfausgang (110) umfasst, und dass ein Dampfwärmetauscher (231) mit dem Überschussdampfausgang (110) zur Gewinnung der Wärme im Überschussdampf vom Trockner verbunden ist.

30. Bioenergiekombinationseinrichtung nach Anspruch 28 oder 29, **dadurch gekennzeichnet, dass** die Dampfturbine (29;33;115;222) mit mindestens einen ersten Dampfausgang (115.1; 215) und mindestens einen zweiten Dampfausgang (115.2;216) versehen ist.

31. Bioenergiekombinationseinrichtung nach einem der Ansprüche 28-30, **dadurch gekennzeichnet, dass** die Dampfturbine (222) mit mindestens einen ersten Dampfeingang (223) und mindestens einen zweiten Dampfeingang (224) versehen ist.

32. Bioenergiekombinationseinrichtung nach einem der Ansprüche 28-31 **dadurch gekennzeichnet, dass** der Dampfwärmetauscher (231) mit dem zweiten Dampfeingang (224) der Dampfturbine (222) zur Zufuhr von reinem Dampf (233) zur Dampfturbine verbunden ist.

33. Anwendung eines Wärmetauschersystems (1;1';1";101) nach einem der Ansprüche 1-15 in einer Bioenergiekombinationseinrichtung (200;200') nach einem der Ansprüche 29-33.

34. Anwendung eines Wärmetauschersystems (1;1';1";101) nach einem der Ansprüche 1-15 in einem Dampftrockner.

35. Anwendung eines Wärmetauschersystems (1;1';1";101) nach einem der Ansprüche 1-15 in einer Dampferzeugungsanlage.

36. Anwendung eines Wärmetauschersystems (1;1';1";101) nach einem der Ansprüche 1-15 in einer Dampfkraftanlage.

## Revendications

1. Système d'échange de chaleur (1;1';1";101) pour chauffer un milieu collecteur (2; 103) et comprenant un boîtier (3;3') ayant une entrée d'écoulement de milieu collecteur (8a) et une sortie d'écoulement de milieu collecteur (8b), le boîtier est divisé en au moins une première section intérieure (16) et une deuxième section intérieure (18), dans lequel la première section intérieure (16) et la deuxième section intérieure (18) sont disposées en série dans le boîtier (3) par rapport à une direction d'écoulement du milieu collecteur (2),
la première section intérieure (16), comprenant un premier échangeur de chaleur (16c; 101.1), est disposée adjacente à l'entrée d'écoulement du milieu collecteur (8a), la deuxième section intérieure (18), comprenant un deuxième échangeur de chaleur (18c;101.2), est disposée à proximité de la sortie d'écoulement du milieu collecteur (8b), le premier échangeur de chaleur (16c;101.1) est alimenté d'un premier milieu de chauffage (16e;101.1e), le deuxième échangeur de chaleur (18c;101,2) est alimenté d'un deuxième milieu de chauffage (18e;101.2e), et **caractérisé en ce que** la première section intérieure (16) et / ou la deuxième section intérieure (18) sont adaptées pour être sous pression, que les premier et deuxième échangeurs de chaleur sont configurés en tant que condenseurs (101.1; 101.2), le premier échangeur de chaleur est alimenté de vapeur sous pression à un niveau de pression P1 et le deuxième échangeur de chaleur est alimenté de vapeur sous pression à un niveau de pression P2, et que le niveau de pression P1 est inférieur au niveau de pression P2, et qu'un premier récipient de condensation (116.1) est relié au premier échangeur de chaleur (16c; 101.1) pour collecter un premier condensat de milieu de chauffage (101.1h) à un niveau de pression P1, et **en ce qu'**un deuxième récipient de condensation (116.2) est relié au deuxième échangeur de chaleur (18c;101.2) pour collecter un deuxième condensat de milieu de chauffage (101.2h) à un niveau de pression P2, et **en ce que** le deuxième récipient de condensation (116.2) est relié au premier récipient de condensation (116.1) et en communication fluidique avec celui-ci, et **en ce que** le premier récipient de condensation (116.1) est relié au premier échangeur de chaleur (16c;101.1) par l'intermédiaire d'un conduit de vapeur (101.1g).

2. Système d'échange de chaleur selon la revendication 1, **caractérisé en ce que** le premier milieu de chauffage (16e;101.1e) est alimenté à partir d'une première source de chaleur, et le deuxième milieu de chauffage (18e;101.2e) est alimenté à partir d'une deuxième source de chaleur.

3. Système d'échange de chaleur selon l'une quelconque des revendications précédentes, **caractérisé en ce que** le premier milieu de chauffage (16e;101.1e) et / ou le deuxième milieu de chauffage (18e;101.2e) comprennent / comprend un milieu compressible tel qu'une vapeur, des gaz de fumée chauds ou gaz industriels chauds.

4. Système d'échange de chaleur selon l'une quelconque des revendications précédentes, **caractérisé en ce que** le milieu collecteur comprend un gaz tel que de l'air ou de la vapeur d'eau.

5. Système d'échange de chaleur selon l'une quelconque des revendications 1 à 4, **caractérisé en ce que** le milieu collecteur comprend un liquide tel que de l'eau ou un liquide contenant de l'eau.

6. Système d'échange de chaleur selon l'une quelconque des revendications précédentes, **caractérisé en ce que** la première section intérieure (16) est disposée à côté de la deuxième section intérieure (18).

7. Système d'échange de chaleur selon l'une quelconque des revendications 1 ou 6, **caractérisé en ce que** la première section intérieure (16) est distancée de la deuxième section intérieure (18).

8. Système d'échange de chaleur selon l'une quelconque des revendications précédentes, **caractérisé en ce qu**'une section intérieure intermédiaire (17') est disposée entre la première section intérieure (16) et la deuxième section intérieure (18).

9. Système d'échange de chaleur selon l'une quelconque des revendications précédentes, **caractérisé en ce que** l'entrée d'écoulement de milieu collecteur (8a) et la sortie d'écoulement de milieu collecteur (8b) sont disposées l'une opposée de l'autre dans le boîtier.

10. Système d'échange de chaleur selon l'une quelconque des revendications précédentes, **caractérisé en ce que** le premier échangeur de chaleur (16c) comprend un côté de sortie (16b) et le deuxième échangeur de chaleur (18c) comprend un côté d'entrée (18a) le côté de sortie (16b) étant disposé essentiellement opposé au côté d'entrée (18a).

11. Système d'échange de chaleur selon l'une quelconque des revendications précédentes, **caractérisé en ce que** le système d'échange de chaleur (1;101) est adapté pour fournir un trajet d'écoulement essentiellement direct pour le milieu collecteur depuis l'entrée de milieu collecteur (8a) vers la sortie de milieu collecteur (8b).

12. Système d'échange de chaleur selon l'une quelconque des revendications précédentes, **caractérisé en ce que** la zone de la section transversale du côté de sortie (16b) du premier échangeur de chaleur (16c) et la zone de la section transversale du côté d'entrée (18a) du deuxième échangeur de chaleur (18c) sont essentiellement correspondantes l'une à l'autre.

13. Système d'échange de chaleur selon l'une quelconque des revendications précédentes, **caractérisé en ce que** la zone de la section transversale de la section intermédiaire (17;17') est essentiellement constante sur toute la longueur de la section.

14. Système d'échange de chaleur selon l'une quelconque des revendications précédentes, **caractérisé en ce que** la section intermédiaire (17') du boîtier (3') est courbée.

15. Système d'échange de chaleur selon l'une quelconque des revendications précédentes, **caractérisé en ce que** le boîtier (3') est essentiellement formé en U.

16. Sécheur (100) comprenant un système d'échange de chaleur (1;1';1";101) selon l'une quelconque des revendications 1 à 15.

17. Procédé pour chauffer un milieu collecteur (2;103) dans un système d'échange de chaleur (1;1';1";101) selon l'une quelconque des revendications 1 à 15, ledit procédé comprenant les étapes consistant à:
- fournir un premier milieu de chauffage (16e; 101.1e) à un premier échangeur de chaleur (16c;101.1)
- fournir un deuxième milieu de chauffage (18e;101.2e) à un deuxième échangeur de chaleur (18c;101.2e),
- transporter le milieu collecteur (2) vers le premier échangeur de chaleur (16c;101.1) et chauffer de manière indirecte le milieu collecteur par le premier milieu de chauffage (16e; 101.1e) suivi par
- transporter le milieu collecteur (2) vers le deuxième échangeur de chaleur (18c;101.2e) et chauffer de manière indirecte le milieu collecteur (2) par le deuxième milieu de chauffage (18e;101.2e),
- alimenter le premier échangeur de chaleur d'une vapeur sous pression à un niveau de pression P1 et
- alimenter le deuxième échangeur de chaleur d'une vapeur sous pression à un niveau de pression P2,
le niveau de pression P1 étant inférieur au niveau de pression P2,
- collecter un premier condensat de milieu de chauffage (101.1h) à un niveau de pression P1 par un premier récipient de condensation (116.1) relié au premier échangeur de chaleur (16c; 101.1),
- collecter un deuxième condensat de milieu de chauffage (101.2h) à un niveau de pression P2 par un deuxième récipient de condensation (116.2) relié au deuxième échangeur de chaleur (18c; 101.2),
- diriger un condensat sous pression ayant la pression P2 à partir du deuxième récipient de condensation au premier récipient de condensation et générer une vapeur détendue et diriger la vapeur détendue au premier échangeur de chaleur.

18. Procédé selon la revendication 17, **caractérisé en ce que** l'on fournit le premier milieu de chauffage (16e;101.1e) à une première température de milieu de chauffage t1, et l'on fournit le deuxième milieu de chauffage (18e;101.2e) à une deuxième température de milieu de chauffage t2, t2 étant essentiellement différente de t1.

19. Procédé selon la revendication 18, **caractérisé en ce que** la deuxième température de milieu de chauffage t2 diffère de la première température de milieu de chauffage t1 lorsque la deuxième température de milieu de chauffage t2 tombe à l'extérieur d'une plage de température de plus ou moins de 0,5 degré Celsius de ladite première température de milieu de chauffage t1.

20. Procédé selon l'une quelconque des revendications 17 à 19, **caractérisé en ce que** l'on fournit le premier milieu de chauffage (16e;101.1e) à une première température de milieu de chauffage t1, et l'on fournit le deuxième milieu de chauffage (18e;101.2e) à une deuxième température de milieu de chauffage t2, t2 étant essentiellement égale à t1.

21. Procédé selon la revendication 20, **caractérisé en ce que** la deuxième température de milieu de chauffage t2 est égale à la première température de milieu de chauffage t1 lorsque la deuxième température de milieu de chauffage t2 tombe à l'intérieur d'une plage de température de plus ou moins de 0,5 degré Celsius de ladite première température de milieu de chauffage t1.

22. Procédé selon l'une quelconque des revendications 17 à 21, **caractérisé en ce que** l'on fournit le premier milieu de chauffage (16e;101.1e) à une première pression de milieu de chauffage P1, et l'on fournit le deuxième milieu de chauffage (18e;101.2e) à une deuxième pression de milieu de chauffage P2, P2 étant essentiellement différente de P1.

23. Procédé selon la revendication 22, **caractérisé en ce que** la deuxième pression de milieu de chauffage P2 diffère de la première pression de milieu de chauffage P1 lorsque la deuxième pression de milieu de chauffage P2 tombe à l'extérieur d'une plage de température de plus ou moins de 0,5 Bar de ladite première pression de milieu de chauffage P1.

24. Procédé selon l'une quelconque des revendications 17 à 23, **caractérisé en ce que** l'on fournit le premier milieu de chauffage (16e;101.1e) à une première pression de milieu de chauffage P1, et l'on fournit le deuxième milieu de chauffage (18e;101.2e) à une deuxième pression de milieu de chauffage P2, P2 étant essentiellement égale à P1.

25. Procédé selon l'une quelconque des revendications 24, **caractérisé en ce que** la deuxième pression de milieu de chauffage P2 est égale à la première pression de milieu de chauffage P1 lorsque la deuxième pression de milieu de chauffage P2 tombe à l'intérieur d'une plage de température de plus ou moins de 0,5 Bar de ladite première pression de milieu de chauffage P1.

26. Procédé selon l'une quelconque des revendications 17 à 25, **caractérisé en ce que** l'on fournit le premier milieu de chauffage (16e;101.1e) et / ou le deuxième milieu de chauffage (18e;101.2e) à partir d'une turbine à vapeur.

27. Procédé selon l'une quelconque des revendications 26, **caractérisé par** l'extraction du premier milieu de chauffage (101.1e) à partir d'une turbine à vapeur (115) à une première pression de milieu de chauffage P1 et l'extraction du deuxième milieu de chauffage (101.2e) à partir de la turbine à vapeur (115) à une deuxième pression de milieu de chauffage P2, P1 étant inférieure à P2.

28. Combinaison à énergie biologique (200; 200') comprenant une installation de génération de vapeur (210; 210') et un sécheur (100) selon la revendication 16, **caractérisée en ce que:**
- l'installation de génération de vapeur (210;210') comprend au moins une turbine à vapeur (29;33;115;222), et **en ce que** la turbine à vapeur est reliée au premier échangeur de chaleur (16c;101.1) et / ou au deuxième échangeur de chaleur (18c;101.2) du sécheur (100) pour fournir de la vapeur en tant que milieu de chauffage au sécheur (101).

29. Combinaison à énergie biologique selon la revendication 28, **caractérisée en ce que** le sécheur (100) comprend une sortie de vapeur excédentaire (110), et **en ce qu'**un échangeur de chaleur à vapeur (231) est relié à la sortie de vapeur excédentaire (110) pour récupérer la chaleur dans la vapeur excédentaire du séchoir.

30. Combinaison à énergie biologique selon les revendications 28 ou 29, **caractérisée en ce que** la turbine à vapeur (29;33;115;222) est pourvue d'au moins une première sortie de vapeur (115.1; 215) et au moins une deuxième sortie de vapeur (115.2;216).

31. Combinaison à énergie biologique selon l'une quelconque des revendications 28 à 30, **caractérisée en ce que** la turbine à vapeur (222) est pourvue d'au moins une première entrée de vapeur (223) et au moins une deuxième entrée de vapeur (224).

32. Combinaison à énergie biologique selon l'une quelconque des revendications 28 à 31, **caractérisée en ce que** l'échangeur de chaleur à vapeur (231) est relié à la deuxième entrée de vapeur (224) de la turbine à vapeur (222) pour fournir de la vapeur propre (233) à la turbine à vapeur.

33. Utilisation d'un système d'échange de chaleur (1;1';1";101) selon l'une quelconque des revendications 1 à 15 dans une combinaison à énergie biologique (200;200') selon l'une quelconque des revendications 29 à 33.

34. Utilisation d'un système d'échange de chaleur (1;1';1";101) selon l'une quelconque des revendications 1 à 15 dans un sécheur à vapeur.

35. Utilisation d'un système d'échange de chaleur (1;1';1";101) selon l'une quelconque des revendications 1 à 15 dans une installation de production de vapeur.

36. Utilisation d'un système d'échange de chaleur (1;1';1";101) selon l'une quelconque des revendications 1 à 15 dans une centrale d'énergie à vapeur.
